# FASCICULE DE BREVET EUROPEEN

(11) **EP 0 832 772 B1**
(45) Date de publication et mention de la délivrance du brevet: **31.07.2002**
(21) Numéro de dépôt: 97402229.5
(22) Date de dépôt: 25.09.1997
(51) Int. Cl.: B60H 1/00, H02B 1/048

(54) **Dispositif de montage d'un bouton de manoeuvre rotatif sur un tableau de commande**
Montagevorrichtung für einen drehbaren Knopf für ein Instrumentenbrett
Mounting device of a turning knob for an instrument panel

(30) Priorité: 30.09.1996 FR 9611883
(43) Date de publication de la demande: 01.04.1998
(73) Titulaire: VALEO CLIMATISATION, 78321 La Verrière (FR)
(72) Inventeur: Le Du, Jean-Claude, 78 310 Maurepas (FR)
(74) Mandataire: Gérard, Michel

(56) Documents cités:
- EP-A- 0 605 324
- EP-A- 0 669 217
- DE-A- 2 226 315
- DE-C- 19 517 781
- FR-A- 2 163 285

## Description

L'invention concerne un tableau de commande, plus particulièrement pour le chauffage ou la climatisation de l'habitacle d'un véhicule, comprenant une façade et au moins un bouton de manoeuvre monté sur la façade, dans une ouverture circulaire de celle-ci, de façon à tourner autour de l'axe de l'ouverture, comme décrit dans le documents DE-C-195 17781 et conforme au préambule de la revendication 1.

On considère comme face avant de la façade celle tournée vers l'utilisateur du tableau de commande, et, dans le présent exposé, les termes "avant" et "arrière" se réfèrent à cette convention. Il est à noter que, dans le cas d'un tableau de commande de chauffage ou de climatisation de véhicule, la face avant est généralement tournée vers l'arrière du véhicule.

Les boutons de manoeuvre rotatifs des tableaux de commande sont couramment montés sur des mécanismes rotatifs placés en arrière de la façade et qu'ils sont destinés à entraîner pour réaliser la commande d'une fonction particulière. Ce type de montage a pour inconvénient que l'assemblage du bouton au mécanisme présente un jeu qui s'ajoute aux jeux internes du mécanisme. De plus, les boutons ne peuvent être solidarisés à la façade que lors de l'assemblage final du tableau de commande, et doivent donc être transportés séparément de celle-ci entre les ateliers où doivent être exécutés des traitements préalables communs (peinture, grattage) et la chaîne de montage du tableau de commande.

Pour résoudre le problème des jeux, il a été proposé de monter le bouton sur la façade par emmanchement à force d'une jupe du bouton dans l'ouverture de passage de celui-ci. L'assemblage est alors irréversible, de sorte qu'ici encore les boutons ne peuvent être pré-assemblés à la façade pour le transport d'un atelier à l'autre, et qu'une erreur de positionnement du bouton ne peut être corrigée.

Un autre mode de fixation du bouton sur la façade tel que décrit par exemple dans le document EP-B-0 699 217, consiste à maintenir celui-ci par une rondelle disposée en arrière de la façade. Ceci nécessite une pièce supplémentaire, et un accès à l'arrière de la façade.

Un troisième mode de fixation est décrit dans le document DE-C-195 17 781 précité et présente un bouton monté sur un guide de lumière qui possède une ouverture à cet effet, et tenu au moyen de pattes d'encliquetage flexibles élastiquement. Le guide de lumière est axialement éloigné de la façade et est solidaire du boîtier auquel appartient cette dernière. Il en résulte que le bouton à une grande longueur axiale ce qui induit d'une part, une plus grande fragilité de celui-ci et d'autre part un encombrement total, du boîtier du tableau de commande, important.

Le but de l'invention est d'éliminer les inconvénients ci-dessus.

L'invention vise notamment un tableau de commande du genre défini en introduction, et prévoit que le bouton est monté directement sur la façade au moyen de pattes d'encliquetage flexibles élastiquement, réparties autour de l'axe, coopérant avec le périmètre de l'ouverture ménagée dans la façade et s'étendant au total sur une fraction mineure de ce périmètre.

Ce montage direct du bouton sur la façade par les pattes d'encliquetage du bouton permet de diminuer l'encombrement total du boîtier du tableau de commande.

De plus, l'encliquetage par des pattes élastiques permet un assemblage réversible, tout en définissant la position radiale du bouton par rapport à l'ouverture, supprimant ainsi les jeux dans cette direction.

Des caractéristiques optionnelles de réalisation de l'invention, complémentaires ou alternatives, sont énoncées ci-après:
- Les pattes d'encliquetage sont au moins au nombre de trois.
- Les pattes d'encliquetage coopèrent avec une surface arrière de la façade adjacente à l'ouverture, par des faces sensiblement perpendiculaires à l'axe, pour assurer un verrouillage axial du bouton sur la façade.
- Le bouton comporte en outre des moyens de freinage s'appuyant sur la façade de façon à opposer à la rotation du bouton un couple de frottement prédéterminé. Cette particularité permet d'obtenir une sensation de freinage uniforme pour les différents boutons d'un même tableau de commande.
- Les moyens de freinage sont également sous forme de pattes réparties autour de l'axe et coopérant avec le périmètre de l'ouverture.
- Les pattes de freinage coopèrent avec le bord de l'ouverture, à l'arrière de la façade, par des surfaces inclinées par rapport à l'axe.
- Les pattes de freinage sont au moins au nombre de deux.
- Le bouton comporte en outre des moyens de centrage coopérant avec le périmètre de l'ouverture pour assurer un centrage du bouton par rapport à l'axe de l'ouverture. Bien que la fonction de centrage puisse être exercée par les pattes d'encliquetage elles-mêmes, il est préférable de prévoir des moyens de centrage supplémentaires indépendants pour limiter les contraintes mécaniques imposées aux pattes d'encliquetage.
- Les moyens de centrage comprennent des éléments de jupe qui pénètrent avec un léger jeu dans l'ouverture et qui s'étendant au total sur une plus grande fraction du périmètre de celle-ci que les pattes d'encliquetage.
- Les éléments de jupe sont au moins au nombre de trois.
- Les pattes de verrouillage, et les pattes de freinage et/ou les éléments de jupe, se succèdent le long du périmètre de l'ouverture, deux éléments consécutifs d'un même type étant toujours séparés par au moins un élément d'un autre type.
- Les pattes de verrouillage et les éléments de jupe sont en nombre égal et sont disposés en alternance le long du périmètre de l'ouverture.
- Le bouton est formé de deux pièces, à savoir un corps coopérant avec la façade et un capuchon ou robe, mutuellement assemblés par encliquetage.

L'invention a également pour objet un bouton de manoeuvre rotatif propre à faire partie d'un tableau de commande tel que défini ci-dessus, comportant des pattes d'encliquetage flexibles élastiquement, réparties autour de son axe de façon à pouvoir coopérer avec le périmètre d'une ouverture circulaire ménagée dans une façade en s'étendant au total sur une fraction mineure de ce périmètre.

Les caractéristiques et avantages de l'invention seront exposés plus en détail dans la description ci-après, en se référant aux dessins annexés, sur lesquels:

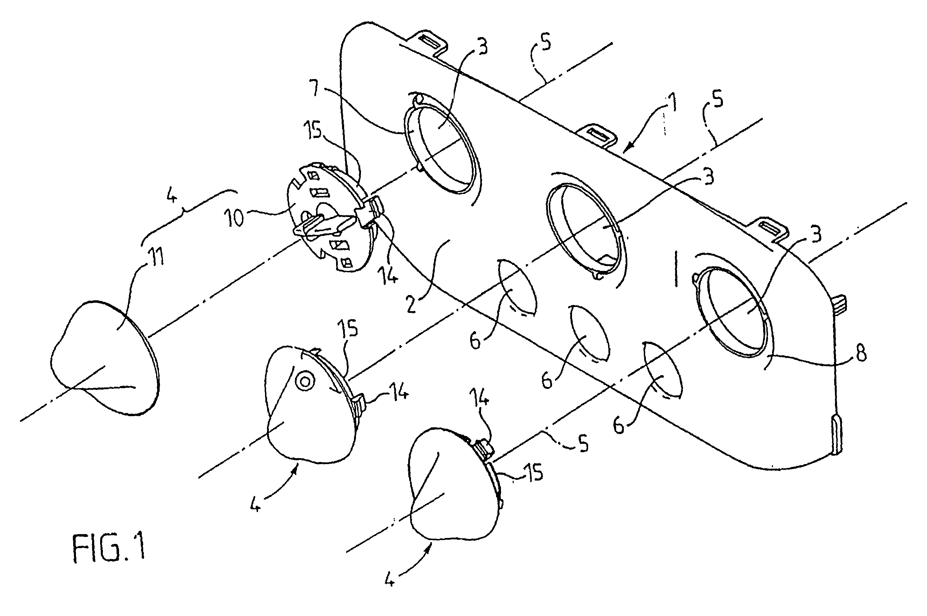

- la figure 1 est une vue en perspective éclatée montrant la façade d'un tableau de commande de climatisation de véhicule selon l'invention et trois boutons de manoeuvre rotatifs se montant sur cette façade;
- la figure 2 est une vue axiale arrière de l'un des boutons;
- la figure 3 est une vue en coupe selon la ligne III-III de la figure 2, montrant seulement les éléments du bouton, et ceux de la façade au voisinage de celui-ci, situés dans le plan de coupe;
- la figure 4 est une vue en coupe du bouton selon la ligne IV-IV de la figure 2; et
- les figures 5 et 6 sont des vues du bouton prises dans deux directions radiales mutuellement perpendiculaires.

La façade 1 présente une paroi principale 2 s'étendant sensiblement selon un plan ou une surface légèrement bombée vers l'avant, et orientée sensiblement selon un plan vertical lorsque le tableau de commande est monté sur la planche de bord du véhicule. La paroi 2 est allongée horizontalement, de la gauche vers la droite du véhicule, et trois ouvertures circulaires semblables 3 y sont ménagées pour recevoir des boutons de manoeuvre 4, les axes 5 des trois ouvertures étant mutuellement alignés dans la direction longitudinale horizontale de la paroi 2. Trois trous 6 sont également ménagés dans la parois 2, de façon connue, pour le passage de boutons poussoirs non représentés, qui sont sans relation avec l'invention et dont il ne sera pas davantage question.

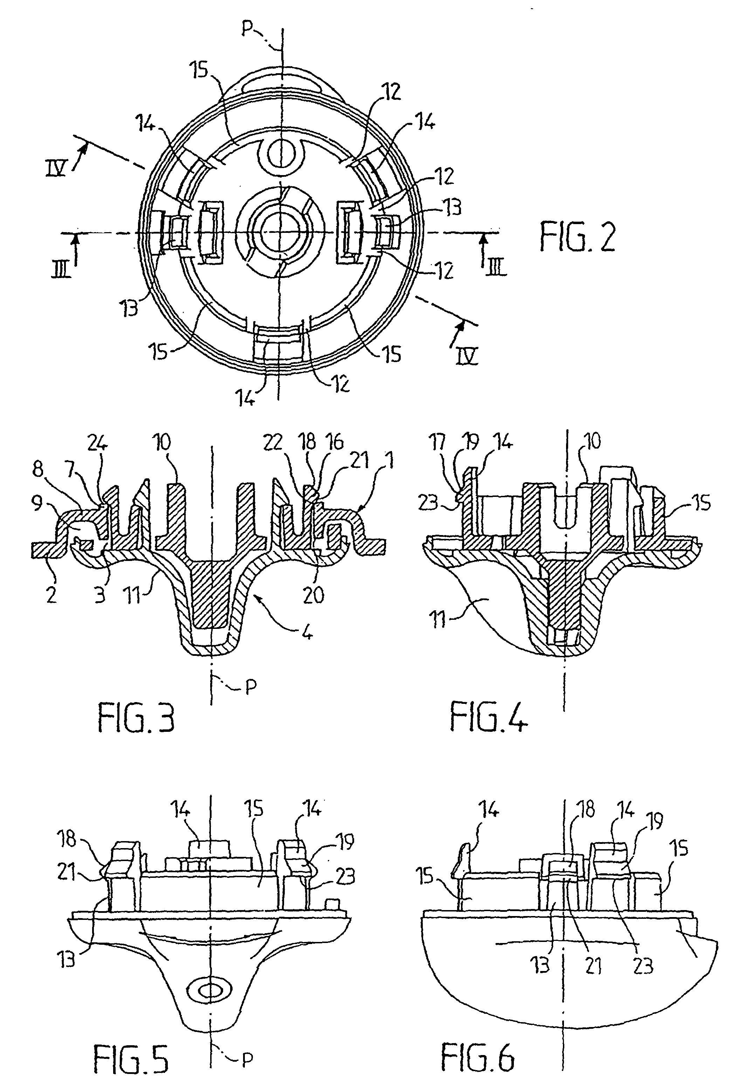

Chaque ouverture 3 est délimitée par une paroi tubulaire cylindrique 7 de faible longueur qui se raccorde à une portion annulaire 8 de la paroi 2 légèrement décalée vers l'arrière par rapport au reste de la paroi, cette portion en retrait délimitant vers l'avant un logement 9 dans lequel le bouton 4 est partiellement reçu, comme on le voit sur la figure 3.

De façon connue, chaque bouton 4 est formé de deux pièces, à savoir un corps 10 et un capuchon ou robe 11, mutuellement assemblés par encliquetage. Le corps 10 coopère avec la façade 1, comme il sera décrit plus loin, et avec un mécanisme non représenté à entraîner en rotation, disposé en arrière de la façade. Le robe 11 possède une forme et un décor adaptés aux souhaits du constructeur du véhicule.

Le corps 10 du bouton s'ajuste à l'intérieur de la paroi tubulaire 7 de la façade par une jupe discontinue formée par huit éléments répartis autour de l'axe du bouton, confondu avec l'axe 5 de l'ouverture, séparés les uns des autres par des fentes axiales étroites 12. Ces huit éléments sont :
- deux pattes de freinage 13 symétriques l'une de l'autre par rapport à un plan diamétral P du bouton;
- trois pattes d'encliquetage 14 disposées sensiblement à 120° les unes des autres, dont l'une est symétrique par rapport au plan P et les deux autres symétriques l'une de l'autre par rapport à ce même plan; et
- trois éléments de centrage 15 sensiblement diamétralement opposés par rapport aux pattes 14 respectivement, dont l'un est symétrique par rapport au plan P et les deux autres symétriques l'un de l'autre par rapport à celui-ci.

Chaque pattes de freinage s'étend sur un arc d'environ 19°, chaque patte d'encliquetage sur un arc d'environ 28° et chaque élément de centrage sur un arc d'environ 80° pour l'un d'eux et d'environ 58° pour les deux autres, soit au total une extension circonférentielle d'environ 337°, très proche d'une circonférence complète. Chacun des éléments 13, 14 et 15 présente une face radialement extérieure cylindrique de rayon légèrement plus petit que le diamètre intérieur de la paroi 7, de sorte qu'un léger jeu radial existe entre cette face et cette paroi. Cependant, alors que les surfaces cylindriques extérieures des éléments de centrage 15 s'étendent axialement jusqu'aux bords libres de ceux-ci, les surfaces cylindriques des pattes 13 et 14 sont interrompues par des ergots 16, 17 respectivement faisant saillie radialement au-delà du rayon de l'ouverture 3. Les ergots 16 et 17 présentent des faces arrière respectives 18, 19 inclinées par rapport à l'axe, qui coopèrent avec l'arête 20 définissant l'entrée de l'ouverture 3 pour permettre un effacement des ergots par flexion élastique des pattes en direction de l'axe lorsqu'on engage le bouton dans l'ouverture. La face avant 21 des ergots 16 est également inclinée de façon à s'appuyer, après retour élastique, sur l'arête 22 délimitant l'ouverture 3 à l'arrière de la façade, pour opposer un couple de frottement prédéterminé à la rotation du bouton. Au contraire, la face avant 23 des ergots 17 est sensiblement perpendiculaire à l'axe de façon à venir en regard du bord arrière 24 de la paroi tubulaire 7 et à assurer un verrouillage axial du bouton sur la façade. Il est cependant possible, en exerçant un effort de traction supérieur à l'effort de poussée exercé pour mettre en place le bouton, d'extraire celui-ci par l'avant grâce à une nouvelle flexion élastique des pattes.

En parcourant la jupe discontinue du corps du bouton dans la direction circonférentielle, à partir de la patte 14 traversée par le plan P, on trouve successivement un élément 15, une patte 13, une patte 14, un élément 15, une patte 14, une patte 13 et enfin un élément 15. Deux éléments consécutifs d'un même type sont donc toujours séparés par au moins un élément d'un autre type.

Outre les avantages soulignés ci-dessus, la disposition selon l'invention simplifie le montage final du tableau de commande du fait que les boutons rotatifs sont déjà en place sur la façade.

## Revendications

1. Tableau de commande, plus particulièrement pour le chauffage ou la climatisation de l'habitacle d'un véhicule, comprenant une façade (1) et au moins un bouton de manoeuvre (4) monté sur la façade, dans une ouverture circulaire (3) de celle-ci, de façon à tourner autour de l'axe (5) de l'ouverture, et tenu au moyen de pattes d'encliquetage (14) flexibles élastiquement et réparties autour de l'axe, **caractérisé en ce que** les pattes d'encliquetage (14) coopèrent avec le périmètre de l'ouverture (3) et s'étendent au total sur une fraction mineure de ce périmètre.

2. Tableau de commande selon la revendication 1, **caractérisé en ce que** les pattes d'encliquetage (14) sont au moins au nombre de trois.

3. Tableau de commande selon l'une des revendications 1 et 2, **caractérisé en ce que** les pattes d'encliquetage coopèrent avec une surface arrière (24) de la façade adjacente à l'ouverture, par des faces (23) sensiblement perpendiculaires à l'axe, pour assurer un verrouillage axial du bouton (4) sur la façade (1).

4. Tableau de commande selon l'une des revendications précédentes, **caractérisé en ce que** le bouton comporte en outre des moyens de freinage (13) s'appuyant sur la façade de façon à opposer à la rotation du bouton un couple de frottement prédéterminé.

5. Tableau de commande selon la revendication 4, **caractérisé en ce que** les moyens de freinage sont également sous forme de pattes (13) réparties autour de l'axe et coopérant avec le périmètre de l'ouverture.

6. Tableau de commande selon la revendication 5, **caractérisé en ce que** les pattes de freinage coopèrent avec le bord (22) de l'ouverture, à l'arrière de la façade, par des surfaces (21) inclinées par rapport à l'axe.

7. Tableau de commande selon l'une des revendications 5 et 6, **caractérisé en ce que** les pattes de freinage (13) sont au moins au nombre de deux.

8. Tableau de commande selon l'une des revendications précédentes, **caractérisé en ce que** le bouton comporte en outre des moyens de centrage (15) coopérant avec le périmètre de l'ouverture pour assurer un centrage du bouton par rapport à l'axe de l'ouverture.

9. Tableau de commande selon la revendication 8, **caractérisé en ce que** les moyens de centrage comprennent des éléments de jupe (15) qui pénètrent avec un léger jeu dans l'ouverture et qui s'étendant au total sur une plus grande fraction du périmètre de celle-ci que les pattes d'encliquetage.

10. Tableau de commande selon la revendication 9, **caractérisé en ce que** les éléments de jupe sont au moins au nombre de trois.

11. Tableau de commande selon l'une des revendications 5, 7, 9 et 10, **caractérisé en ce que** les pattes de verrouillage, et les pattes de freinage et/ou les éléments de jupe, se succèdent le long du périmètre de l'ouverture, deux éléments consécutifs d'un même type étant toujours séparés par au moins un élément d'un autre type.

12. Tableau de commande selon la revendication 11, **caractérisé en ce que** les pattes de verrouillage et les éléments de jupe sont en nombre égal et sont disposés en alternance le long du périmètre de l'ouverture.

13. Tableau de commande selon l'une des revendications précédentes, **caractérisé en ce que** le bouton (4) est formé de deux pièces, à savoir un corps (10) coopérant avec la façade (1) et un capuchon ou robe (11), mutuellement assemblés par encliquetage.

14. Bouton de manoeuvre rotatif (4) propre à faire partie d'un tableau de commande selon l'une des revendications précédentes, comportant des pattes d'encliquetage (14) flexibles élastiquement, réparties autour de son axe de façon à pouvoir coopérer avec le périmètre d'une ouverture circulaire (3) ménagée une façade du tableau en s'étendant au total sur une fraction mineure de ce périmètre.

## Patentansprüche

1. Steuertafel, insbesondere für die Heizung oder Klimatisierung des Innenraums eines Fahrzeugs, mit einer Stirnwand (1) und mindestens einem Betätigungsknopf (4), der in einer kreisförmigen Öffnung (3) der Stirnwand an dieser so montiert ist, daß er um die Achse (5) der Öffnung gedreht werden kann, und der mittels elastisch flexiblen und um die Achse verteilten Rastnasen (14) gehalten wird, **dadurch gekennzeichnet, daß** die Rastnasen (14) mit dem Umfang der Öffnung (3) zusammenwirken und sich insgesamt über einen kleinen Bruchteil dieses Umfangs erstrecken.

2. Steuertafel nach Anspruch 1, **dadurch gekennzeichnet, daß** von den Rastnasen (14) mindestens drei vorgesehen sind.

3. Steuertafel nach einem der Ansprüche 1 und 2, **dadurch gekennzeichnet, daß** die Rastnasen durch im wesentlichen senkrecht zur Achse verlaufende Flächen (23) mit einer hinteren Fläche (24) der Stirnwand neben der Öffnung zusammenwirken, um eine Axialverriegelung des Knopfes (4) an der Stirnwand (1) zu gewährleisten.

4. Steuertafel nach einem der vorhergehenden Ansprüche, **dadurch gekennzeichnet, daß** der Knopf des weiteren Bremsmittel (13) aufweist, die sich so an die Stirnwand stützen, daß sie der Drehung des Knopfes ein vorbestimmtes Reibmoment entgegensetzen.

5. Steuertafel nach Anspruch 4, **dadurch gekennzeichnet, daß** die Bremsmittel ebenfalls in Form von um die Achse verteilten und mit dem Umfang der Öffnung zusammenwirkenden Nasen (13) ausgebildet sind.

6. Steuertafel nach Anspruch 5, **dadurch gekennzeichnet, daß** die Bremsnasen rückwärtig der Stirnwand durch bezüglich der Achse geneigte Flächen (21) mit dem Rand (22) der Öffnung zusammenwirken.

7. Steuertafel nach einem der Ansprüche 5 und 6, **dadurch gekennzeichnet, daß** von den Bremsnasen (13) mindestens zwei vorgesehen sind.

8. Steuertafel nach einem der vorhergehenden Ansprüche, **dadurch gekennzeichnet, daß** der Knopf des weiteren Zentriermittel (15) aufweist, die mit dem Umfang der Öffnung zusammenwirken, um ein Zentrieren des Knopfes bezüglich der Öffnungsachse zu gewährleisten.

9. Steuertafel nach Anspruch 8, **dadurch gekennzeichnet, daß** die Zentriermittel Schürzenelemente (15) aufweisen, die mit einem leichten Spiel in die Öffnung eintreten und sich insgesamt über einen größeren Bruchteil deren Umfangs als die Rastnasen erstrecken.

10. Steuertafel nach Anspruch 9, **dadurch gekennzeichnet, daß** von den Schürzenelementen mindestens drei vorgesehen sind.

11. Steuertafel nach einem der Ansprüche 5, 7, 9 und 10, **dadurch gekennzeichnet, daß** die Verriegelungsnasen und die Bremsnasen und/oder die Schürzenelemente entlang dem Umfang der Öffnung einander folgen, wobei zwei aufeinanderfolgende Elemente der gleichen Art immer durch mindestens ein Element einer anderen Art voneinander getrennt sind.

12. Steuertafel nach Anspruch 11, **dadurch gekennzeichnet, daß** die Verriegelungsnasen und die Schürzenelemente in gleicher Anzahl vorgesehen und entlang dem Umfang der Öffnung abwechselnd angeordnet sind.

13. Steuertafel nach einem der vorhergehenden Ansprüche, **dadurch gekennzeichnet, daß** der Knopf (4) aus zwei Teilen besteht, nämlich einem mit der Stirnwand (1) zusammenwirkenden Körper (10) und einer Kappe oder Abdeckung (11), die durch Verrasten aneinander angebracht sind.

14. Drehbetätigungsknopf (4), der sich zur Bildung eines Teils einer Steuertafel nach einem der vorhergehenden Ansprüche eignet und elastisch flexible Rastnasen (14) aufweist, die so um seine Achse verteilt sind, daß sie mit dem Umfang einer in einer Stirnwand der Tafel ausgebildeten kreisförmigen Öffnung (3) zusammenwirken können, wobei sie sich insgesamt über einen kleinen Bruchteil dieses Umfangs erstrecken.

## Claims

1. Control panel, more specifically for the heating or air-conditioning of the cabin of a vehicle, comprising a facade (1) and at least one operating knob (4) mounted on the facade, in a circular opening (3) thereof, so that it can be turned about the axis (5) of the opening, and held by means of elastically flexible snap-fastening tabs (14) distributed about the axis, **characterized in that** the snap-fastening tabs (14) collaborate with the perimeter of the opening (3) and extend, in total, over a minor fraction of this perimeter.

2. Control panel according to Claim 1, **characterized in that** the snap-fastening tabs (14) number at least three.

3. Control panel according to either of Claims 1 and 2, **characterized in that** the snap-fastening tabs collaborate with a rear surface (24) of the facade adjacent to the opening, via faces (23) roughly perpendicular to the axis, so as to lock the knob (4) axially onto the facade (1).

4. Control panel according to one of the preceding claims, **characterized in that** the knob further comprises braking means (13) pressing against the facade in such a way as to generate a predetermined frictional moment that opposes the turning of the knob.

5. Control panel according to Claim 4, **characterized in that** the braking means are also in the form of tabs (13) distributed about the axis and collaborating with the perimeter of the opening.

6. Control panel according to Claim 5, **characterized in that** the braking tabs collaborate with the edge (22) of the opening, on the rear of the facade, via surfaces (21) which are inclined with respect to the axis.

7. Control panel according to either of Claims 5 and 6, **characterized in that** the braking tabs (13) number at least two.

8. Control panel according to one of the preceding claims, **characterized in that** the knob further comprises centring means (15) collaborating with the perimeter of the opening to centre the knob with respect to the axis of the opening.

9. Control panel according to Claim 8, **characterized in that** the centring means comprise skirt elements (15) which penetrate the opening with a small amount of clearance and which in total stretch over a larger fraction of the perimeter thereof than the snap-fastening tabs.

10. Control panel according to Claim 9, **characterized in that** the skirt elements number at least three.

11. Control panel according to one of Claims 5, 7, 9 and 10, **characterized in that** the locking tabs, and the braking tabs and/or the skirt element follow on from one another along the perimeter of the opening, two consecutive elements of one and the same type always being separated by at least one element of another type.

12. Control panel according to Claim 11, **characterized in that** the locking tabs and the skirt elements are present in equal numbers and are arranged in alternation along the perimeter of the opening.

13. Control panel according to one of the preceding claims, **characterized in that** the knob (4) is made of two parts, namely a body (10) collaborating with the facade (1), and a cap or cover (11), which parts are joined together by snap-fastening.

14. Rotary operating knob (4) able to form part of a control panel according to one of the preceding claims, comprising elastically flexible snap-fastening tabs (14) distributed about its axis so as to be able to collaborate with the perimeter of a circular opening (3) made in a facade of the panel while extending, in total, over a small fraction of this perimeter.
